# EUROPEAN PATENT APPLICATION

(11) **EP 1 097 885 A1**
(43) Date of publication of application: **09.05.2001**
(21) Application number: 00123358.4
(22) Date of filing: 30.10.2000
(51) Int. Cl.: B65G 17/06

(54) **Chain operated floor conveyor**

(30) Priority: 05.11.1999 IT MI992315
(71) Applicant: Giardina Movimentazioni Industriali S.r.l., 22066 Figino Serenza (CO) (IT)
(72) Inventor: Mauri, Ferruccio, 20161 Milan (IT)
(74) Representative: Gislon, Gabriele

(57) **Abstract**

A chain operated floor conveyor, consisting of a basically U-shaped track section (1), resting on a support surface, where the U-shaped arm ends form tracks (3) for the wheels (10,11,12,13) connected to a base (7), this base (7) being operatively connected to a chain (5), with the base (7) having a support (23) at each end which holds in an oscillatory manner a pin (20,21), integral with a crossbeam (8,9); the crossbeam (8,9) having a support shaft at each end for a wheel and that at least one support of the oscillation pin (20,21) is housed, in a translable manner, in a hole aperture (22) made in the body of the base (7).

## Description

The present invention refers to a chain operated floor conveyor.

Aerial transporting installations are known from the previous art, in which the translation means, in addition to the support means of the parts, are assembled above the floor. These elevated conveyors have proved effective when carrying parts of reduced size. For the conveyance of larger parts, e.g. very long parts, floor conveyors have proved more useful.

In floor conveyors it has become hitherto known to ultimately use carrying trolleys, with vertically assembled pins in relation to the floor. The trolley is operatively connected, by means of a drag pin and guide pin, to the chain which moves, with the interposition of wheels, in a track section envisaged in or on the floor.

The wheels, fixed to the trolley, run along parallel tracks, within which the chain moves.

The drawback of the known conveyor is recognised in the fact that the extended length of known trolleys leads to uneven trolley movement and undesired lateral leaning which causes considerable friction on the wheels.

The known conveyors, for technical reasons, basically go in a straight line and with considerable difficulty can move along meandering runs, e.g. with a sinusoidal tendency or with sudden deviations at right angles. In addition, the known conveyors must generally move over a horizontal surface and it is not possible to go up inclines or surfaces with marked ups and downs.

These conditions considerably limit the practical use of the floor conveyors.

The aim of the present invention is to obviate the drawbacks associated with the previous technique and to propose a chain operated floor conveyor which allows trolleys or bases of considerably extended length to be used, ensuring stable support of the parts to be conveyed, not setting any limits as regards the course covered by the chain operated floor conveyor, which can stretch along routes with bends, inclines or surfaces with marked ups and downs.

This aim is reached using a conveyor consisting of a basically U-shaped track section resting on the floor, with the ends of the U-shaped arms, which form tracks for the wheels, connected to a transport base which is operatively connected to a chain, characterised by the fact that at each end, the base has a support holding in an oscillatory manner a pin integral with a crossbeam, the crossbeam containing a wheel at each end, and that a support for an oscillation pin is housed, in a translable manner, in a hole aperture, made in the body of the base.

This type of device will make it possible to steer the trolley safely, allowing it to go along a surface, which contains the track.

Moreover, the trolley will be able to go up inclines as well as down slopes, go round bends of very limited radius with ease, automatically compensating variation in the distance between the pairs of front and rear wheels.

The subject, contrived according to the present invention, will now be described in more detail and illustrated in the enclosed designs, in which:
figure 1 shows a plan view of the trolley devised according to the invention which covers a straight line;
figure 2 shows a plan view of the trolley devised according to the invention which turns a bend;
figure 3 shows a view and partially a sectional view of a detail of the pair of rear wheels;
figure 4 shows a front view of the trolley with the drive chain; and
figure 5 shows a sectional view of a detail of the trolley according to the IV-IV line of figure 4.

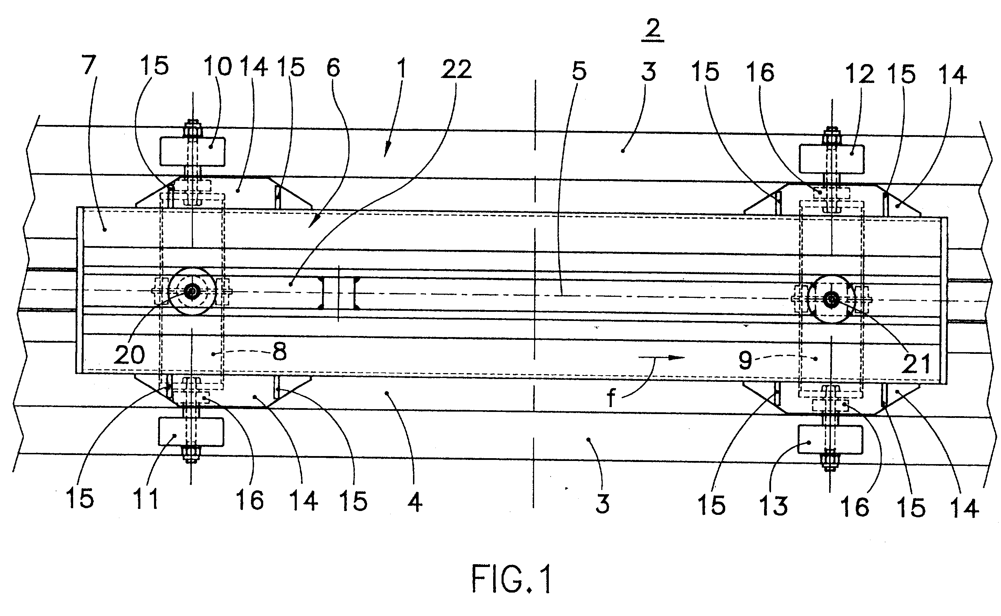

Figure 1 shows a sliding track 1 with a U-shaped section.

The track 1 is advantageously fitted into the floor, denoted by 2.

The track 1 has lateral edges 3, arranged in parallel to the floor surface 2.

A chain, denoted by 5, translates in the channel 4, which is delimited by the track section 1.

This chain 5 operatively connects trolleys 6 meant for the conveyance of the parts to be handled.

As can be seen in figure 1, the trolley 6 consists of a base 7 which holds near its ends crossbeams 8 and 9 which contain sliding wheels 10, 11, 12 and 13.

The wheels 10, 11, 12 and 13 run along the edges 3 of track 1.

In coincidence with the crossbeams 8 and 9, plates denoted by 14 emerge laterally from the base 7.

Ribs 15 are built on the lateral plates 14 acting as positioning means of crossbeams 8 and 9 as well as delimitation means of the oscillatory movement of crossbeams 8, 9.

To avoid undesired friction between the crossbeam 8, 9 and ribs 15, rollers 16 are provided which are assembled on the axes which support the wheels 10, 11, 12 and 13.

Each crossbeam 8, 9 is integral with an oscillation pin 20, 21 which, as will be described in greater detail later, is operatively connected to the transport chain 5.

Whereas the front pin 21 is locally fixed with respect to plate 7 of trolley 6, the pin 20 is housed, so that it can slide, in a hole aperture 22 made in the structure of the trolley 1.

The trolley 1, shown in plan view in figure 1 is dragged by the chain 5 in the direction indicated by the arrow f.

In addition, it can be seen from figure 1 that the crossbeam 8, together with oscillation pin 20, is moved in the hole aperture 22 towards the rear end and the sliding rollers 16 rest against the rear positioning ribs 15.

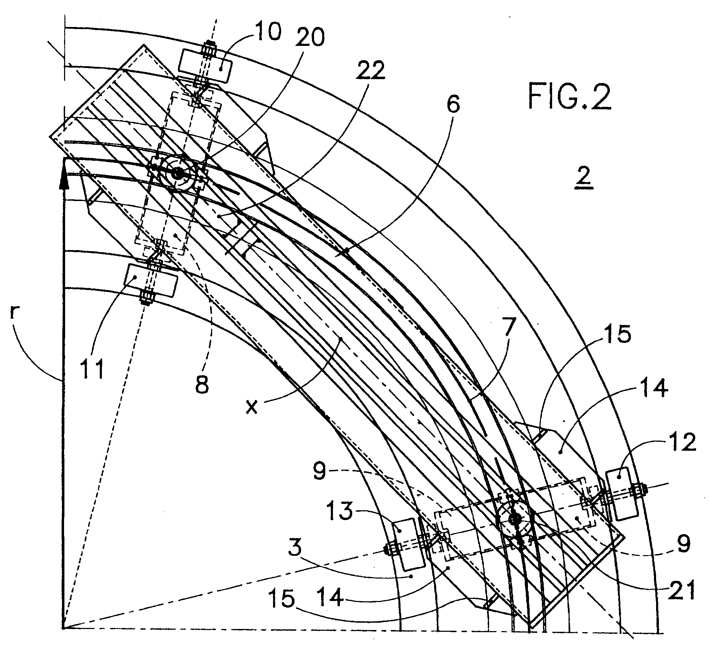

Figure 2 clearly shows trolley 6 which goes along a curved track 3, with a neutral radius denoted by (r).

Going round a tight bend, it is noted that the front crossbeam 9 makes an oscillatory movement, tilting in relation to the longitudinal X-axis of trolley 6.

The oscillation pin 21 remains in a position which is locally fixed in relation to the base 7.

Moreover, it can be seen from figure 2 that the rear crossbeam 8 of the trolley 6 has swivelled around pin 20, automatically staying in line with the run of the curved sliding track 3.

Since the arc camber of the bend turned by trolley 4 is reduced upon entering the bend, the invention proposes to support the mechanism, operatively connected to the oscillation pin 20, in hole aperture 22, thus allowing a longitudinal shifting of pin 20 in the hole aperture 22. Thus automatic compensation of the camber between the two pins 20, 21 will be obtained, a camber which varies according to the radius (r) and to the run of the bend.

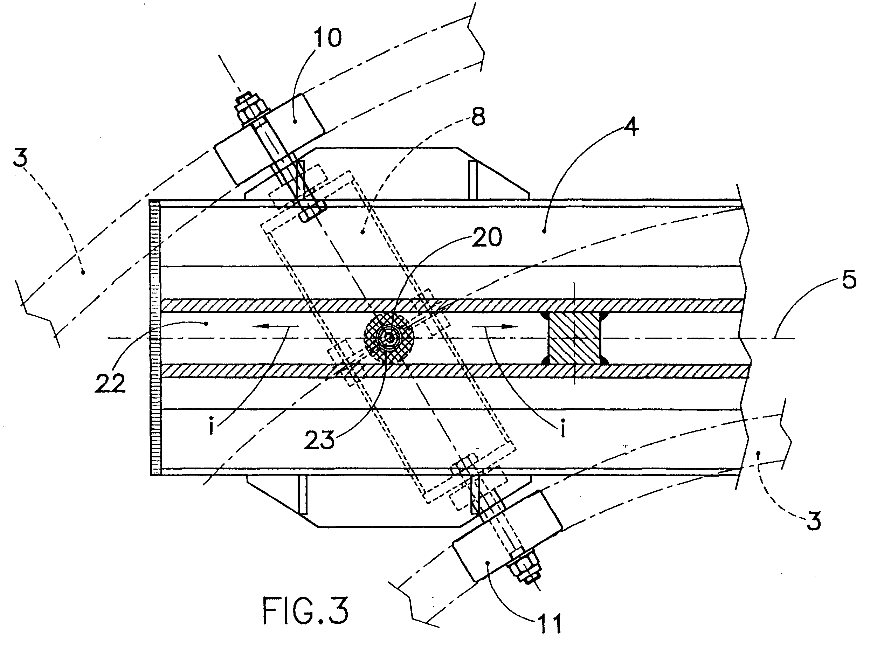

Figure 3 shows an enlarged scale design of the detail (I) in figure 1.

The trolley 4 supports the wheels 10 and 11 by means of crossbeam 8 and, due to the presence of oscillation pin 20, the crossbeam 8 can automatically tilt in relation to the X-axis and in relation to a bend in the tracks 3, hence, automatic positioning of the crossbeam 8 is achieved, together with the wheels 10 and 11, depending on the radius (r) as well as the run of the tracks 3.

From figure 3 it can be seen in detail that the oscillation pin 20 is surrounded by a sliding support bush 23, which is free to move in the hole aperture 22, as indicated by the arrow (i).

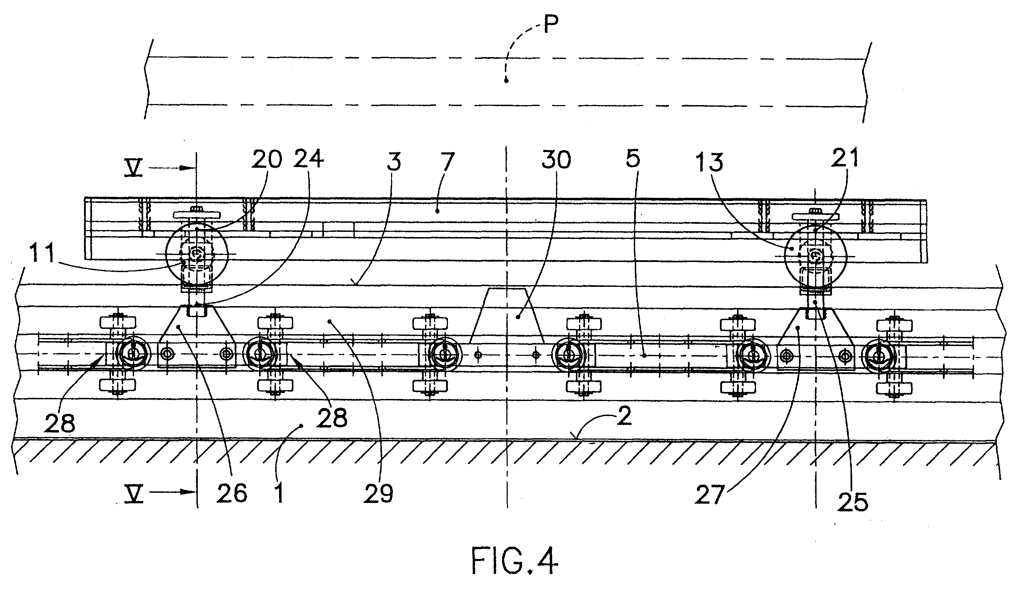

The front view of figure 4 shows the trolley 4 with wheels 10 and 11, as well as 12 and 13, running on the tracks 3 of the section 1. The section 1 has a U-shaped profile and it is integral with or incorporated into floor 2.

Each pin 20, 21 is connected by an extension 24, respectively 25 with a support plate 26, respectively 27 integral with known roller guide units 28, arranged crosswise and precision guided, both vertically and horizontally, in a suitable sheet metal section 29.

The roller guide units 28 are supported by plates 26 and 27 and may also have a guide trolley and extra support in the event of a particularly long trolley 7.

All the plates 26, 27 are operatively connected to chain 5.

The trolley 4 is equipped with a support structure (not shown) which holds the parts P, only one example of which is shown in figure 4.

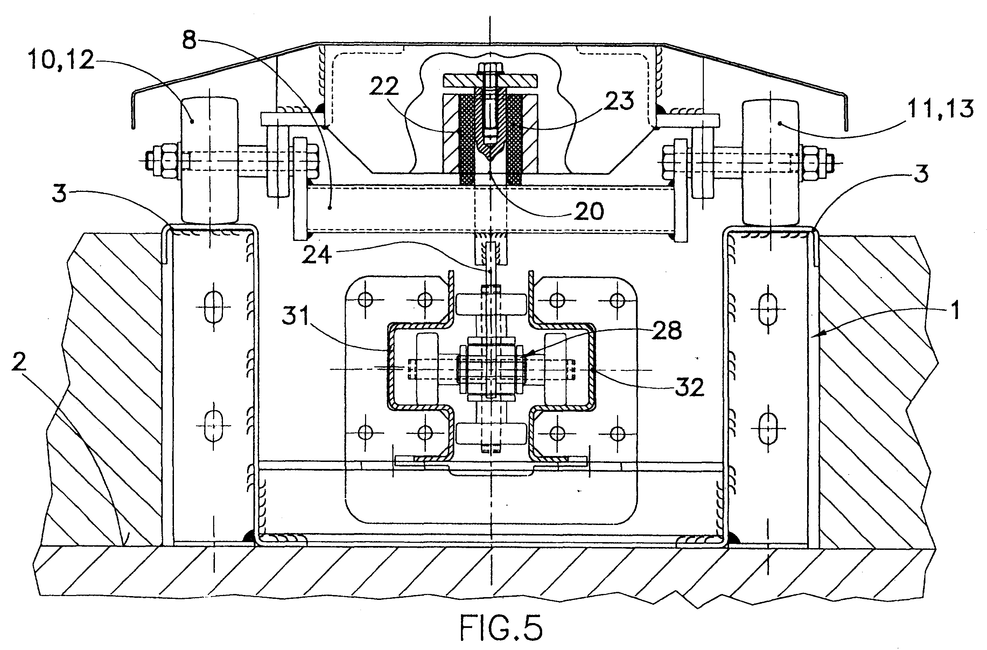

The sectional view of figure 5, made according to the line V-V of figure 4, shows the U-shaped track section 1 set on the floor 2.

Above, the ends of the vertical arms define sliding tracks denoted by 3, on which run the rollers 10, 12, and respectively 11, 13.

Each pair of wheels, e.g. 10, 11, is connected to a crossbeam 8, which holds the oscillation pin 20 surrounded by the support bush 23 located, in a sliding way, in the hole aperture 22.

Below, the stem 20 is joined to an extension 24 which is operatively connected to the known roller guide unit which slide in the "Omega" shaped section 31 and 32.

The guide units 28, together with guides 31 and 32, are arranged inside the space delimited by the U-shaped track section 1.

## Claims

1. A chain conveyor, consisting of a substantially U-shaped track section (1) resting on the floor (2), with the ends of the U-shaped arms forming tracks (3) for the wheels (10, 11, 12, 13) connected to a conveyor base (7), which is operatively connected to a transport chain (5) characterised in that at each end, the base (7) has a support (23) which holds in an oscillatory manner a pin (20, 21) which is integral with a crossbeam (8, 9) containing a wheel (10, 11, 12, 13) at each end, and that a support (23) for an oscillation pin (20) is housed, in a translable manner, in a hole aperture (22) made in the body of the base (7).

2. A chain conveyor as in claim 1, characterised in that plates (14) emerge laterally, in correspondence to the crossbeams (8, 9), from the base (7), and that ribs (15) are built on the plates (14) which form positioning and delimitation means of the oscillatory movement of the crossbeams (8, 9).

3. A chain conveyor as in claim 1, characterised in that there are rollers (16) between the wheels (10, 11, 12, 13) and the crossbeam (8, 9), being assembled on the axes which support the wheels (10, 11, 12, 13).

4. A chain conveyor as in claim 1, characterised in that the front oscillation pin (21) is locally fixed in relation to the base (7) of the trolley (6) and that the rear oscillation pin (20) is housed, so that it can slide, in a hole aperture (22), made in the structure of the trolley (1).

5. A chain conveyor as in claim 1, characterised in that each oscillation pin (20, 21) is connected to a support plate (26, 27) by an extension (24, 25) and that the support plate (26, 27) is integral with the roller guide units (28), movable in a section (29).
